Europäisches Patentamt

European Patent Office

Office européen des brevets

(11) Veröffentlichungsnummer: **0 038 425**

**A2**

(12) # EUROPÄISCHE PATENTANMELDUNG

(21) Anmeldenummer: **81102051.0**

(22) Anmeldetag: **19.03.81**

(51) Int. Cl.³: **G 06 K 19/08**
**G 07 C 11/00**

(30) Priorität: **17.04.80 DE 3014882**

(43) Veröffentlichungstag der Anmeldung:
**28.10.81 Patentblatt 81/43**

(84) Benannte Vertragsstaaten:
**AT BE CH DE FR GB IT LI LU NL SE**

(71) Anmelder: **Porst, Hannsheinz**
**Schmausenbuckstrasse 86**
**D-8500 Nürnberg 6(DE)**

(72) Erfinder: **Porst, Hannsheinz**
**Schmausenbuckstrasse 86**
**D-8500 Nürnberg 6(DE)**

(72) Erfinder: **Hofmann, Hellmut W.**
**Schrammstrasse 8**
**D-8500 Nürnberg(DE)**

(74) Vertreter: **Patentanwälte Kohler - Schwindling - Späth**
**Hohentwielstrasse 41**
**D-7000 Stuttgart 1(DE)**

(54) **Berechtigungsausweis.**

(57) Ein neuer Berechtigungsausweis gibt dem Inhaber die Möglichkeit, die Rechtmäßigkeit des Besitzes nachzuweisen, so daß ein Mißbrauch weitgehend verhindert wird. Dieser Berechtigungsausweis weist in einem handlichen kleinen Gehäuse (1) einen Festspeicher (10), in dem eine ein Kennwort bildende, alphanumerische Zeichenfolge gespeichert ist, eine Eingabevorrichtung, ein Wortregister (9), in das mittels der Eingabevorrichtung eine alphanumerische Zeichenfolge eingebbar ist, einen Komparator (11), an dessen Eingänge der Festspeicher (10) und das Wortregister (9) angeschlossen sind, und eine an den Komparator (11) angeschlossene Anzeigevorrichtung auf, welche die von dem Komparator festgestellte, vorhandene oder fehlende Übereinstimmung der beiden Zeichenfolgen zur Anzeige bringt. Ein erstes Zeitglied mit einer Sperreinrichtung, welche nach Ablauf einer vorgegebenen ersten Zeitspanne ein die Anzeige einer vorhandenen Übereinstimmung verhinderndes Sperrsignal liefert, kann dazu dienen, die Gültigkeitsdauer des Berechtigungs ausweises zu begrenzen. Mit dem Wortregister (9) kann noch ein zweites Zeitglied gekoppelt sein, das den Inhalt des Wortregisters nach Ablauf einer vorgegebenen zweiten, relativ kurzen Zeitspanne löscht, damit nicht ein Mißbrauch dadurch zustande kommen kann, daß die Anzeige einer Übereinstimmung unbegrenzt erhalten bleibt.

./...

Fig. 3

Anmelder:

Hannsheinz Porst
Schmausenbuckstraße 86
8500 Nürnberg 6

Stuttgart, den 16. April 1980

P 3849 S-C

Vertreter:

Kohler-Schwindling-Späth
Patentanwälte
Hohentwielstr. 41
7000 Stuttgart 1

Berechtigungsausweis
_____

Im Geschäftsleben finden Berechtigungsausweise verschiedener Art Verwendung, die den Besitzer zum Bezug verschiedener Leistungen berechtigen. Solche Berechtigungsausweise

./.

sind beispielsweise die Sicherungskarten von Sparbüchern, die Euroscheckkarten und nicht zuletzt auch die zunehmende Verbreitung findenden Kreditkarten. Bei all diesen Berechtigungsausweisen besteht die Gefahr, daß sie von Dritten zu Ungunsten des Inhabers mißbraucht werden können, weil in aller Regel angenommen wird, daß der Besitzer auch der berechtigte Inhaber des Ausweises ist. Die Kontrolle unter Verwendung von Verlustlisten u. dgl. ist nicht nur umständlich, sondern auch ungenügend, weil der Verlust eines solchen Berechtigungsausweises häufig nicht schnell genug bemerkt und der ausgebenden Stelle gemeldet werden kann, um empfindliche Verluste durch Mißbrauch zu verhindern.

Demgemäß liegt der Erfindung die Aufgabe zugrunde, einen Berechtigungsausweis zu schaffen, der mit großer Sicherheit nur von dem rechtmäßigen Eigentümer benutzt werden kann.

Diese Aufgabe wird nach der Erfindung dadurch gelöst, daß ein Festspeicher, in dem eine ein Kennwort bildende alphanumerische Zeichenfolge gespeichert ist, und ein Wortregister, in das mittels einer Eingabevorrichtung eine alphanumerische Zeichenfolge eingebbar ist, an einen Komparator angeschlossen sind, der ein die vorhandene oder fehlende Übereinstimmung der beiden Zeichenfolgen anzeigendes Steuersignal an eine Anzeigevorrichtung liefert.

./.

Wenn die in dem Festspeicher des erfindungsgemäßen Berechtigungsausweises enthaltene alphanumerische Zeichenfolge nur dem rechtmäßigen Inhaber des Ausweises bekannt ist, ist nur er in der Lage, die gleiche alphanumerische Zeichenfolge mittels der Eingabevorrichtung in das Wortregister einzugeben und dadurch zu bewirken, daß der Komparator ein die Übereinstimmung der beiden Zeichenfolgen anzeigendes Steuersignal an die Anzeigevorrichtung liefert, welche dann diese Übereinstimmung anzeigt. Daher kann sich der Besitzer dieses Ausweises jederzeit durch Eingabe der richtigen, nur ihm bekannten Zeichenfolge als der rechtmäßige Inhaber ausweisen. Dieser Nachweis kann jederzeit geführt werden, wenn der Besitzer des Berechtigungsausweises die ihm darauf zustehenden Leistungen abruft. Da die Stellenzahl der Zeichenfolge beliebig gewählt werden kann, besteht eine außerordentlich hohe Sicherheit gegen einen Mißbrauch. Bei einer acht Stellen umfassenden Zeichenfolge und Beschränkung der Zeichen auf die Ziffern 1 bis 0 ergeben sich 100 Millionen verschiedene Möglichkeiten. Wird eine sedezimale Darstellung gewählt, ergeben acht Stellen mehr als 4 Milliarden unterschiedlicher Zeichenfolgen.

In der Praxis kann ein solcher Berechtigungsausweis in ähnlicher Weise ausgebildet sein wie ein kleiner Taschenrechner, also in einem kleinen Gehäuse angeordnet sein, welches sowohl die Eingabevorrichtung als auch die Anzeigevorrichtung aufweist. Es kann sich dabei um ein

./.

- 4 -

gesondertes Gerät handeln oder mit anderen Geräten integriert sein, beispielsweise Armbanduhren, Schreibgeräten
und so weiter, wie es auch bei Taschenrechnern der Fall
ist.

Bei einer besonders bevorzugten Ausführungsform der Erfindung ist der Berechtigungsausweis mit einem Taschenrechner in der Weise kombiniert, daß die Eingabevorrichtung unmittelbar von dem Tastenfeld und die Anzeigevorrichtung unmittelbar von dem Display des Taschenrechners gebildet wird. Solche Taschenrechner, die heute
schon häufig das Format einer Scheckkarte haben und
nur wenig dicker sind als eine solche, haben bereits
eine außerordentlich große Verbreitung gefunden und können ohne nennenswerten Aufwand mit den zusätzlichen Einrichtungen versehen werden, welche dem Taschenrechner die
Eigenschaften verleihen, welche seine Verwendung als Berechtigungsausweis ermöglichen.

Wenn es ebenso wie bei Scheckkarten erwünscht ist, die
Geltungsdauer des Berechtigungsausweises zu beschränken,
so kann ein Zeitglied mit einer Sperreinrichtung vorhanden sein, welche nach Ablauf einer vorgegebenen Zeitspanne ein die Anzeige einer vorhandenen Übereinstimmung verhinderndes Sperrsignal liefert. Es wird dann also nach
Ablauf der vorgegebenen Zeitspanne der Berechtigungsausweis praktisch unbrauchbar, weil er unter keinen Umständen

./.

ein die Berechtigung anzeigendes Signal mehr liefert. In diesem Fall könnte dann der Berechtigungsausweis an den Herausgeber zurückgegeben werden, der durch einen Eingriff in das Gerät die Sperre aufheben und das Zeitglied neu einstellen kann.

Das Zeitglied kann in einfacher Weise einen Oszillator und einen Zähler umfassen, dem die Schwingungen des Oszillators zugeführt werden und dessen Stand proportional zu den Perioden der Schwingungen verändert wird und auf dessen Stand die Sperreinrichtung anspricht. Beispielsweise können der Oszillator und der Zähler so beschaffen sein, daß der Zähler, ausgehend von einem Null-Zustand, genau nach einem Jahr einen End-Zustand erreicht, bei dem das Sperrsignal ausgelöst wird, das dann unabhängig vom Zählerstand bestehen bleibt. Ein entsprechender Oszillator und ein Zähler sind bei allen elektronischen Uhren mit Datumsanzeige vorhanden, so daß der erfindungsgemäße Berechtigungsausweis auch mit einer solchen elektronischen Uhr kombiniert werden kann. Die Sperreinrichtung kann dann in einfacher Weise einen Datumspeicher sowie einen mit dem Datumspeicher und einem Register der Datumanzeige verbundenen Komparator umfassen, der bei Erfüllung vorgegebener Bedingungen, insbesondere bei Übereinstimmung des im Datumspeicher und im Register enthaltenen Datums, das Sperrsignal liefert. Um in einem solchen Fall einen Mißbrauch zu verhindern, muß die Uhr so ausgebildet sein, daß die Einstellung des laufenden Datums nur vom Herausgeber des Berechtigungsausweises vorgenommen werden kann.

./.

- 6 -

Um eine Anzeige zu liefern, welche die Berechtigung des
Besitzers bestätigt, kann die Anzeigevorrichtung über
eine Torschaltung mit einem Zeichengenerator für eine
die Übereinstimmung anzeigende Zeichenfolge gekoppelt
sein und die Torschaltung auf das Steuersignal und gegebenenfalls das Sperrsignal ansprechen. Anstelle einer
optischen Anzeigevorrichtung oder zusätzlich zu einer
solchen könnte auch ein akustischer Signalgeber vorgesehen sein. Dies ist insbesondere dann möglich, wenn der
Berechtigungsausweis in eine elektronische Uhr mit Weckeinrichtung integriert ist, so daß dann zum Nachweis der
Berechtigung der Signalgeber der Weckeinrichtung aktiviert werden kann.

Um zu vermeiden, daß die Anzeige einer Berechtigung über
einen längeren Zeitraum erhalten bleibt, und auf diese
Weise auch ein Unberechtigter in den Besitz eines Berechtigungsausweises mit einer solchen Anzeige gelangen
kann, kann in weiterer Ausgestaltung der Erfindung mit
dem Wortregister ein Zeitglied gekoppelt sein, das den
Inhalt des Wortregisters nach Ablauf einer vorgegebenen
Zeitspanne löscht. Die Zeitspanne kann ausreichend kurz
gewählt sein, beispielsweise ein oder zwei Minuten, um
den Benutzer zu zwingen, für jeden Nachweis seiner Berechtigung die nur ihm bekannte Zeichenfolge erneut einzugeben und dadurch das Bestätigungssignal auszulösen.

0038425

- 7 -

Der erfindungsgemäße Berechtigungsausweis kann, ähnlich
wie Kreditkarten o. dgl., unmittelbar mit einer Kennung
versehen sein, welche eine Registrierung und Abrechnung
der gelieferten Leistungen ermöglicht. Zu diesem Zweck
kann eine solche Kennung mittels maschinenlesbarer Zeichen angebracht sein, beispielsweise dem heute weit verbreiteten Strich-Code. Es wäre aber auch möglich, den
Berechtigungsausweis in Verbindung mit einer Kreditkarte
derart zu verwenden, daß der Berechtigungsausweis und
die Kreditkarte eine gleiche Kennung aufweisen, beispielsweise die gleiche Kundennummer, die selbstverständlich von
der dem rechtmäßigen Inhaber bekannten Zeichenfolge verschieden ist. Zur gemeinsamen Verwendung mit einer Kreditkarte kann der erfindungsgemäße Berechtigungsausweis ein
mit einer Aufnahme für eine Kreditkarte versehenes Gehäuse
aufweisen.

Die Erfindung wird im folgenden anhand des in der Zeichnung
dargestellten Ausführungsbeispieles näher beschrieben und
erläutert. Die der Beschreibung und der Zeichnung zu entnehmenden Merkmale können bei anderen Ausführungsformen
der Erfindung einzeln für sich oder zu mehreren in beliebiger Kombination Anwendung finden. Es zeigen:

Fig. 1   eine Draufsicht auf einen Berechtigungsausweis
         nach der Erfindung in Form eines Taschenrechners
         mit integrierter Uhr in vergrößertem Maßstab,

./.

Fig. 2  eine Seitenansicht des Berechtigungsausweises
nach Fig. 1  und

Fig. 3  ein Blockschaltbild der für das Verständnis der
Erfindung notwendigen, elektronischen Bauteile
des Berechtigungsausweises nach Fig. 1.

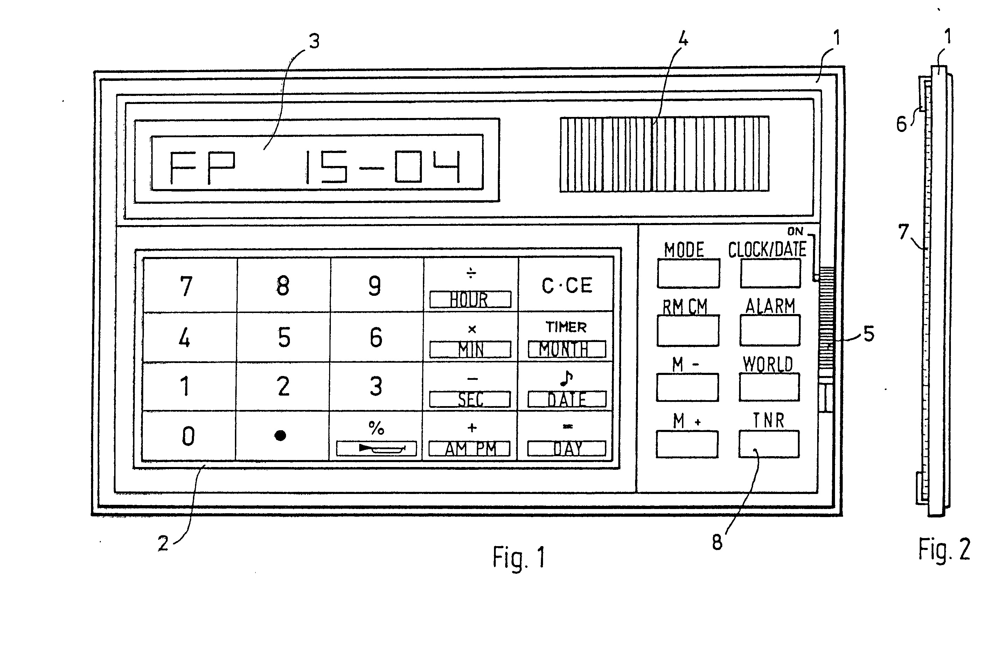

Fig. 1 zeigt das Ausführungsbeispiel eines mit einer Uhr
kombinierten Taschenrechners im Scheckkartenformat, wie
er in vielen Ausführungsformen auf dem Markt ist. Das
rechteckige, sehr flache Gehäuse 1 weist an seiner Voderseite ein Tastenfeld 2 auf, das eine Anzahl von üblichen
Ziffern- und Funktionstasten umfaßt. Über dem Tastenfeld 2
befindet sich eine Flüssigkristall-Anzeige oder LCD-Display
3 sowie ein Feld mit einer Kennung 4 in Form eines maschinenlesbaren Strich-Codes. Am in Fig. 1 rechten Rand des Gehäuses 1 befindet sich ein Betriebsschalter 5. An der Rückseite des Gehäuses 1 befindet sich ein von angeformten
Winkelschienen 6 gebildeter Rahmen, der zu einer Schmalseite des Gehäuses 1 hin offen ist und zur Aufnahme einer
Kreditkarte 7 dient. Die zur Rückseite des Gehäuses 1 parallelen Schenkel der Winkelschienen 6 sind leicht federnd
ausgebildet, so daß sie die Kreditkarte 7 unter Reibungsschluß sicher festhalten.

Auf die Einrichtung des bisher beschriebenen Taschenrechners mit integrierter Uhr als Berechtigungsausweis weisen
bisher lediglich die Anbringung einer maschinenlesbaren
Kennung 4, die Anbringung von Winkelschienen 6 zur Aufnahme

./.

einer Kreditkarte 7 und insbesondere eine zusätzliche
Taste 8 im Tastenfeld 2 hin, die mit TNR bezeichnet ist.
Auch die Schaltungsanordnung des Rechners mit integrierter Uhr bedurfte nur weniger Ergänzungen, um die zusätzliche Funktion als Berechtigungsausweis zu verwirklichen.

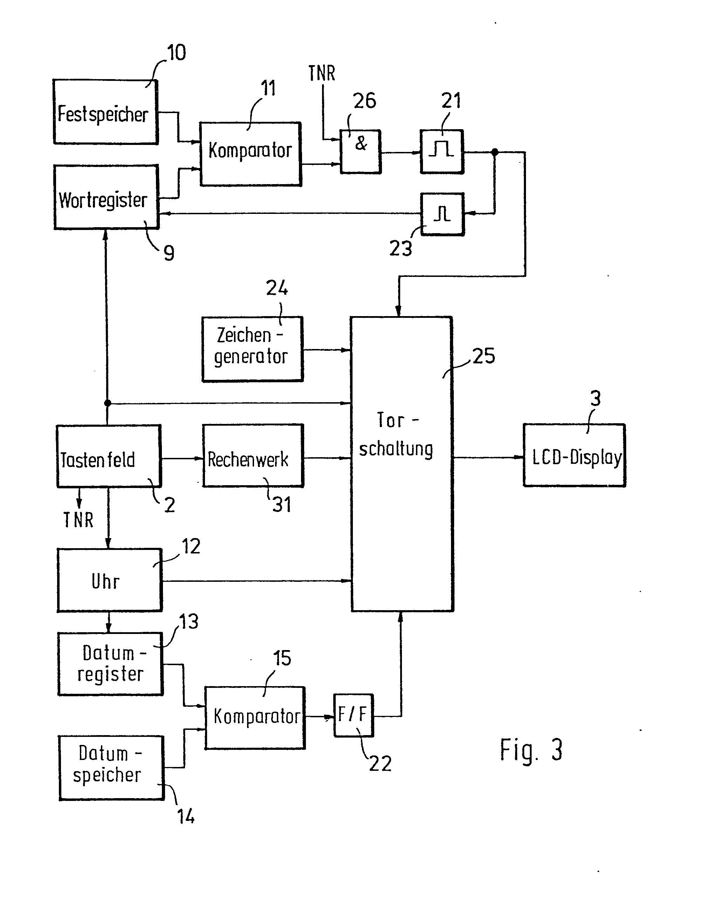

Wie Fig. 3 zeigt, weist die Schaltungsanordnung ein mit
dem Tastenfeld 2 gekoppeltes Wortregister 9 auf, dessen
Kapazität ebenso viel Zeichen umfaßt wie das LCD-Display 3,
das bei dem dargestellten Ausführungsbeispiel zur Darstellung von acht Zeichen eingerichtet ist. Alle über das
Tastenfeld 2 eingegebenen Zeichen werden in das Wortregister 9 eingeschrieben. Dem Wortregister 9 ist ein Festspeicher 10 zugeordnet, der eine vom Herausgeber des Berechtigungsausweises fest eingegebene Zeichenfolge enthält, die nicht vom Benutzer des Berechtigungsausweises
verändert werden kann, die dem berechtigten Inhaber aber
bekannt ist. An das Wortregister 9 und den Festspeicher 10
ist ein Komparator 11 angeschlossen, der bei Übereinstimmung der Zeichenfolgen im Wortregister und Festspeicher
einem UND-Glied 26 ein die Übereinstimmung der beiden
Ziffernfolgen anzeigendes Steuersignal zuführt. Normalerweise wird eine solche Übereinstimmung nicht vorhanden
sein, zumal das Wortregister 9 auch immer dann geladen
wird, wenn das Tastenfeld zur Eingabe von Rechengrößen
oder zum Stellen von Uhrzeiten benutzt wird. Wird jedoch
in das Wortregister die Zeichenfolge eingegeben, die mit
der im Festspeicher 10 enthaltenen Zeichenfolge übereinstimmt, und außerdem die Taste 8 des Tastenfeldes 2

./.

betätigt, wird dem UND-Glied 26 zusätzlich zu dem Steuersignal des Komparators 11 das Signal TNR zugeführt, was
zur Folge hat, daß vom Ausgangssignal des UND-Gliedes 26
ein Monoflop 21 angestoßen wird, das einen Steuerimpuls
erzeugt und einer Torschaltung 25 zuführt, die für die
Dauer des Steuerimpulses eine Verbindung zwischen einem
Zeichengenerator 24 und dem LCD-Display 3 herstellt, welches infolgedessen die durch den Zeichengenerator 24 bestimmte Anzeige für eine Übereinstimmung der genannten
beiden Zeichenfolgen liefert und dadurch den Besitzer des
Berechtigungsausweises als den berechtigten Inhaber ausweist. Liefert dagegen der Komparator 11 kein Steuersignal,
so fehlt an dem entsprechenden Eingang des UND-Gliedes 26
bei Betätigen der TNR-Taste 8 eines der beiden Signale,
die zum Anstoßen des Monoflop 21 notwendig sind, und es
wird nicht der Zeichengenerator 24 auf das LCD-Display 3
durchgeschaltet. Vielmehr bleibt die normale Funktion der
Torschaltung erhalten, bei der die mit dem Tastenfeld 2
eingegebenen Ziffern auf dem LCD-Display 3 zur Darstellung
gebracht werden.

Die vorstehend beschriebene Übereinstimmungs-Anzeige hat
zur Voraussetzung, daß der Torschaltung 25 ein weiteres
Freigabesignal zugeführt wird, das von einem mit der Uhr
12 verbundenen Flip-Flop 22 geliefert wird. Das Flip-Flop
22 ist mit dem Ausgang eines Komparators 15 verbunden, an
dessen Eingänge ein Datumregister 13 und ein Datumspeicher
14 angeschlossen sind. In den Datumspeicher 14 kann wiederum vom Herausgeber des Berechtigungsausweises ein bestimmtes Verfalldatum eingegeben werden, nach dessen Erreichen der Berechtigungsausweis ungültig wird. Dagegen ist das Datumregister 13 mit der Uhr 12 derart verbunden, daß es stets das gegenwärtige Datum enthält. Auch das gegenwärtige Datum wird vor Ausgabe des Berechtigungsausweises auf den richtigen Wert eingestellt und dann von der Uhr fortlaufend auf den neuesten Stand gebracht, ohne daß der Benutzer eine Eingriffsmöglichkeit hätte. Die üblichen Stellmöglichkeiten sind auf die Korrektur der Uhrzeit sowie die Einstellung von Weckzeiten u. dgl. beschränkt. Ferner hat das Flip-Flop 22 einen Zustand, bei dem der Torschaltung 25 ein Vorbereitungssignal zugeführt wird, welches der Torschaltung ein Ansprechen auf das Ausgangssignal des Monoflop 21 ermöglicht. Erreicht jedoch das laufende Datum im Datumregister 13 das im Datumspeicher 14 enthaltene Datum, so stellt der Komparator 15 eine Übereinstimmung fest und liefert an das Flip-Flop 22 ein Ausgangssignal, welches den Zustand dieses Flip-Flop ändert. Dies hat eine bleibende Änderung des der Torschaltung 25 vom Flip-Flop 22 zugeführten Signales zur Folge, so daß nunmehr die Torschaltung für ein Ansprechen auf das Ausgangssignal des Monoflop 21 gesperrt ist. Damit ist verhindert, daß nach Überschreiten des im Datumspeicher 14 enthaltenen Verfallsdatums der Berechtigungsausweis noch ein Signal liefern kann, das eine Berechtigung zur Entgegennahme von Leistungen anzeigt.

./.

An den Ausgang des Monoflop 21 ist ein weiteres Monoflop 23 angeschlossen, das auf die Rückflanke des vom
Monoflop 21 gelieferten Steuerimpulses anspricht und
einen Löschimpuls liefert, der dem Wortregister 9 zugeführt wird. Auf diese Weise ist gewährleistet, daß nicht
unbeabsichtigt im Wortregister die richtige Zeichenfolge
erhalten bleibt und dadurch einen Mißbrauch des Berechtigungsausweises ermöglicht. Für praktische Zwecke dürfte
es ausreichen, wenn das die Berechtigung anzeigende
Signal ein bis zwei Minuten erhalten bleibt, damit sich
jemand von dem Berechtigungsnachweis überzeugen kann.
Andererseits ist dann gewährleistet, daß bei jeder Vorlage des Berechtigungsausweises erneut die nur dem Inhaber bekannte Zeichenfolge eingegeben werden muß.

Der Zeichengenerator 24 sollte eine Kennzeichnung geben,
die auf andere Weise nicht erzeugbar ist. Wenn beispielsweise das Tastenfeld des Rechners nur die Eingabe von
numerischen Zeichen erlaubt, könnte der Zeichengenerator
Kennbuchstaben erzeugen. Es ist auch möglich, vom Zeichengenerator erzeugte Zeichen mit anderen, im Berechtigungsausweis verfügbaren Zeichen zu kombinieren, beispielsweise
eine vom Zeichengenerator erzeugte Buchstabenfolge mit
dem Tagesdatum zu kombinieren, das beispielsweise zur
Unterscheidung von der normalen Datumsangabe noch blinkend dargestellt werden könnte.

./.

Weiterhin versteht es sich, daß die in Fig. 3 dargestellte
Schaltungsanordnung nur eine von vielen möglichen Schaltungsanordnungen ist, die zur Ausführung der beschriebenen
Funktionen realisierbar sind. Dabei ist es auch nicht erforderlich, daß die in Fig. 3 dargestellten oder ähnliche
Komponenten als diskrete Schaltungselemente oder Schaltungseinheiten vorliegen, sondern es können diese Elemente durch das Programm eines Mikroprozessors verwirklicht
sein, wie er in Taschenrechnern normalerweise zur Durchführung der verschiedenen Rechenoperationen vorhanden ist.
Dieses Programm könnte dann durch die TNR-Taste abgerufen
werden. Dabei könnten dann der Festspeicher 10 und der
Datumsspeicher 14 von Bereichen in dem Festspeicher gebildet werden, der das Betriebsprogramm des Mikroprozessors enthält. Bei einem solchen Festspeicher sollte es
sich dann um ein RePROM handeln, damit sowohl die fest
gespeicherte alphanumerische Zeichenfolge als auch das
gespeicherte Verfallsdatum änderbar sind. Es versteht
sich ferner, daß der Berechtigungsausweis nicht nur einen
eine Kenn-Nummer darstellenden Strich-Code 4 aufzuweisen
braucht, der mit der Kenn-Nummer einer Kreditkarte 7 übereinstimmt, sondern es könnte der Rechner an seiner Rückseite mit einer Prägung versehen sein, wie sie Kreditkarten üblicherweise aufweisen, so daß der Rechner unmittelbar wie eine Kreditkarte benutzt werden könnte, oder
es könnten auch alle normalerweise auf einer Kreditkarte
enthaltenen Eingaben in Form eines maschinenlesbaren
Codes vorgesehen sein, so daß die Rechnungserstellung
nicht durch mechanischen Abdruck, sondern durch elektronisch gesteuerten Ausdruck erfolgen kann.

./.

- 14 -

Patentansprüche

1. Berechtigungsausweis, dadurch gekennzeichnet, daß ein Festspeicher (10), in dem eine ein Kennwort bildende alphanumerische Zeichenfolge gespeichert ist, und ein Wortregister (9), in das mittels einer Eingabevorrichtung eine alphanumerische Zeichenfolge eingebbar ist, an einen Komparator (11) angeschlossen sind, der ein die vorhandene oder fehlende Übereinstimmung der beiden Zeichenfolgen anzeigendes Steuersignal an eine Anzeigevorrichtung liefert.

2. Berechtigungsausweis nach Anspruch 1, dadurch gekennzeichnet, daß die Eingabevorrichtung von dem Tastenfeld (2) und die Anzeigevorrichtung von dem Display (3) eines Taschenrechners gebildet wird.

3. Berechtigungsausweis nach Anspruch 1 oder 2, dadurch gekennzeichnet, daß die Anzeigevorrichtung einen akustischen Signalgeber umfaßt.

4. Berechtigungsausweis nach einem der vorhergehenden Ansprüche, dadurch gekennzeichnet, daß ein Zeitglied mit einer Sperreinrichtung vorhanden ist, welche nach Ablauf einer vorgegebenen Zeitspanne ein die Anzeige einer vorhandenen Übereinstimmung verhinderndes Sperrsignal liefert.

./.

5.  Berechtigungsausweis nach Anspruch 4, dadurch gekennzeichnet, daß das Zeitglied einen Oszillator und
    einen Zähler umfaßt, dem die Schwingungen des Oszillators zugeführt werden und dessen Stand proportional
    zu den Perioden der Schwingungen verändert wird und
    auf dessen Stand die Sperreinrichtung anspricht.

6.  Berechtigungsausweis nach Anspruch 5, dadurch gekennzeichnet, daß der Oszillator und der Zähler Bestandteile einer elektronischen Uhr (12) mit Datumsanzeige
    sind und die Sperreinrichtung einen Datumsspeicher
    (14) sowie einen mit dem Datumsspeicher und einem
    Register (13) der Datumsanzeige verbundenen Komparator (15) umfaßt, der bei Erfüllung vorgegebener Bedingungen das Sperrsignal liefert.

7.  Berechtigungsausweis nach einem der vorhergehenden
    Ansprüche, dadurch gekennzeichnet, daß die Anzeigevorrichtung über eine Torschaltung (25) mit einem
    Zeichengenerator (24) für eine die Übereinstimmung
    anzeigende Zeichenfolge gekoppelt ist und die Torschaltung (25) auf das Steuersignal und gegebenenfalls
    das Sperrsignal anspricht.

8.  Berechtigungsausweis nach einem der vorhergehenden
    Ansprüche, dadurch gekennzeichnet, daß mit dem Wortregister (9) ein Zeitglied gekoppelt ist, das den
    Inhalt des Wortregisters nach Ablauf einer vorgegebenen Zeitspanne löscht.

9. Berechtigungsausweis nach einem der vorhergehenden Ansprüche, dadurch gekennzeichnet, daß er mit einer vorzugsweise maschinenlesbaren Kennung versehen ist.

10. Berechtigungsausweis nach einem der vorhergehenden Ansprüche, dadurch gekennzeichnet, daß er ein mit einer Aufnahme für eine Kreditkarte (7) versehenes Gehäuse (1) aufweist.

Fig. 1

Fig. 2

0038425

0038425

Fig. 3